# EUROPÄISCHE PATENTSCHRIFT

(11) **EP 4 169 815 B1**
(45) Veröffentlichungstag und Bekanntmachung des Hinweises auf die Patenterteilung: **26.11.2025**
(21) Anmeldenummer: 22198274.7
(22) Anmeldetag: 28.09.2022
(51) Int. Cl.: B62D 33/06, F16F 1/393

(54) **LANDWIRTSCHAFTLICHES FAHRZEUG**
AGRICULTURAL VEHICLE
VÉHICULE AGRICOLE

(30) Priorität: 22.10.2021 DE 102021127497; 17.11.2021 DE 102021129994
(43) Veröffentlichungstag der Anmeldung: 26.04.2023
(73) Patentinhaber: Deere & Company, Moline, IL 61265 (US)
(72) Erfinder: HINGNE, Abhijit, 68163 Mannheim (DE); FLEBBE, Thiemo, 68163 Mannheim (DE)
(74) Vertreter: Dehnhardt, Florian Christopher

(56) Entgegenhaltungen:
- CN-A- 108 974 149
- US-A- 4 135 757
- US-A- 5 024 283
- US-A1- 2011 241 379

## Beschreibung

Die Erfindung betrifft ein landwirtschaftliches Fahrzeug mit einer Tragstruktur und mit einem an der Tragstruktur befestigten Kopplungssystem zur beweglichen Kopplung einer Fahrzeugkabine mit der Tragstruktur.

Ein derartiges Kopplungssystem kann federelastische Komponenten enthalten. Sie helfen, von der Tragstruktur auf die Fahrzeugkabine übertragene stoßartige Kräfte abzufedern und dadurch den Fahrkomfort für den Fahrer zu verbessern. Solche stoßartigen Kräfte entstehen beispielsweise bei einer unebenen Fahrbahn und bei verschiedenen Brems- bzw. Beschleunigungsmanövern des Fahrzeugs.

Das Dokument US 2011/241379 A1 offenbart ein landwirtschaftliches Fahrzeug mit einem solchen Kopplungssystem nach dem Oberbegriff des unabhängigen Anspruchs 1.

Aufgabe der vorliegenden Erfindung ist es, ein Kopplungssystem zwischen der Tragstruktur und der Fahrzeugkabine hinsichtlich der montagetechnischen Anforderungen zu vereinfachen.

Diese Aufgabe wird durch ein landwirtschaftliches Fahrzeug mit den Merkmalen des Patentanspruchs 1 gelöst.

Gemäß Patentanspruch 1 weist ein landwirtschaftliches Fahrzeug eine Tragstruktur (z.B. Chassis, Rahmen) und ein an der Tragstruktur befestigtes Kopplungssystem zur beweglichen Kopplung einer Fahrzeugkabine mit der Tragstruktur auf. Das Kopplungssystem weist mindestens ein federelastisches Lagerelement auf. Die Fahrzeugkabine ist über mindestens ein Spannelement mit dem federelastischen Lagerelement lösbar verbunden. Dabei verläuft die Spannkraftrichtung des Spannelementes quer zu einer Fahrzeug-Hochachse entlang einer Querrichtung.

Mit einer derartigen Spannkraftrichtung ist es verhältnismä-βig einfach möglich, Montage-, Wartungs- und Reparaturarbeiten an dem Kopplungssystem und der Fahrzeugkabine von den Seitenflanken des Fahrzeugs her durchzuführen. Hierzu sind das Kopplungssystem und/oder die Fahrzeugkabine in geeigneter Weise konstruktionstechnisch ausgebildet. Insbesondere ist es konstruktionstechnisch einfach möglich, das oder die Spannelemente außerhalb der eigentlichen Fahrzeugkabine anzuordnen und montagetechnisch zu handhaben. Umständliche Montage-, Wartungs- und Reparaturarbeiten innerhalb oder unterhalb der Fahrzeugkabine entfallen hierdurch oder werden zumindest deutlich reduziert.

Die Spannkraftrichtung entlang der Querrichtung bedeutet nicht zwangsläufig, dass die Spannkraftrichtung exakt parallel zu einer Fahrzeug-Querachse ausgerichtet ist. Vielmehr sind auch solche Abweichungen der Spannkraftrichtung von der Fahrzeug-Querachse möglich, welche ebenfalls eine komfortable Durchführung von Montage-, Wartungs- und Reparaturarbeiten an dem Kopplungssystem und der Fahrzeugkabine von den Seitenflanken des Fahrzeugs her gewährleisten.

Das federelastische Lagerelement ist vorzugsweise aus einem gummiartigen Werkstoff mit federelastischen Eigenschaften ausgebildet.

Insbesondere ist das Lagerelement in seinem Montage- bzw. Einbauzustand elastisch vorgespannt.

Bei dem Spannelement handelt es sich insbesondere um einen Spannbolzen oder eine Spannschraube mit einem Außengewinde, welches mit einer Spannmutter zusammenwirkt. Derartige Spannelemente sind kostengünstig erhältlich und montagetechnisch einfach handhabbar. Hierdurch wird eine montagetechnisch einfache und gleichzeitig zuverlässige mechanische Verbindung zwischen dem Lagerelement und der Fahrzeugkabine unterstützt.

Vorzugsweise ist die Fahrzeugkabine an mehreren Verbindungsstellen mit jeweils einem Lagerelement lösbar verbunden. Besonders bevorzugt sind vier Verbindungsstellen der Fahrzeugkabine für jeweils ein Lagerelement vorgesehen. Insbesondere handelt es sich um zwei frontseitige und zwei heckseitige Verbindungsstellen der Fahrzeugkabine. Je Verbindungsstelle sind an der Fahrzeugkabine beispielsweise ein oder mehrere spezifische Kabinenabschnitte vorgesehen, welche mit dem Lagerelement lösbar verbunden werden. Dabei ist der jeweilige Kabinenabschnitt beispielsweise von einem Montageloch für das Spannelement durchsetzt. Der vorgenannte Kabinenabschnitt ist z.B. als ein vom Kabinenboden abstehender Abschnitt (z.B. Ausleger, Strebe oder dergleichen) ausgebildet.

Das mindestens eine vorgesehene Lagerelement kann durch weitere Komponenten wie z.B. Stoßdämpfer, Stabilisatoren und spezifische Verbindungselemente ergänzt werden. Diese Komponenten können Bestandteil eines Aufhängungssystems zur Aufhängung der Fahrzeugkabine relativ zur Tragstruktur sein.

Das landwirtschaftliche Fahrzeug ist vorzugsweise als ein Traktor bzw. Schlepper oder als eine Erntemaschine ausgebildet.

Weitere vorteilhafte Ausgestaltungen des erfindungsgemäßen Fahrzeugs gehen aus den Unteransprüchen hervor.

Vorzugsweise verläuft die Spannkraftrichtung bzw. die Querrichtung parallel zu einer Fahrzeug-Querachse. Somit verläuft die Spannkraftrichtung im Wesentlichen auch parallel zu den Radachsen des Fahrzeugs. Eine derartige Spannkraftrichtung unterstützt im Falle von Reparaturen oder Wartungsarbeiten eine komfortable Demontage und Wiedermontage einzelner Teile des Kopplungssystems und der Fahrzeugkabine.

In einer bevorzugten Ausführungsform ist das Lagerelement von einem Durchgangsloch zur Aufnahme des Spannelementes durchsetzt. Dies unterstützt eine montagetechnisch einfache Kopplung der Fahrzeugkabine mit der Tragstruktur.

Weiter bevorzugt weist das Lagerelement einen zylindrischen Außenquerschnitt auf, wodurch eine effiziente und in unterschiedliche Radialrichtungen gleichmäßige federelastische Kopplung zwischen der Fahrzeugkabine und der Tragstruktur erfolgt.

Insbesondere ist das vorgenannte Durchgangsloch koaxial zum vorgenannten zylindrischen Außenquerschnitt angeordnet. Mit diesen geometrischen Merkmalen kann das Lagerelement beispielsweise als ein hohlzylindrisches Gummilager ausgebildet sein.

Gemäß der Erfindung weist das Kopplungssystem eine an der Tragstruktur befestigte Verbindungskonsole auf, welche eine Lagervorrichtung zur Lagerung des Lagerelementes trägt. Dies unterstützt eine mechanisch stabile Positionierung des Lagerelementes innerhalb des Kopplungssystems und somit auch eine stabile Kopplung der Fahrzeugkabine. Insbesondere ist das Lagerelement elastisch vorgespannt gelagert.

Die Befestigung der Verbindungskonsole an der Tragstruktur kann lösbar (z.B. Verschraubung) oder unlösbar (z.B. Schweißung) ausgebildet sein. Unabhängig von ihrer lösbaren oder unlösbaren Befestigung ist die Verbindungskonsole mit der Tragstruktur insbesondere unbeweglich bzw. starr verbunden.

Gemäß der Erfindung weist die Lagervorrichtung einen in Querrichtung offenen Lagerrahmen zur Aufnahme des Lagerelementes auf. Dies unterstützt eine montagetechnisch einfache Handhabung des Kopplungssystems von einer oder beiden Seitenflanken des Fahrzeugs her. Der Lagerrahmen hat vorzugsweise einen ringartigen Querschnitt und bietet hierdurch einen montagefreundlichen hohlzylindrischen Aufnahmeraum für ein Lagerelement mit zylindrischem Querschnitt.

Gemäß der Erfindung liegt das Lagerelement gemeinsam mit einem das Lagerelement umgebenden Zwischenrahmen in dem Lagerrahmen ein. Der Zwischenrahmen kann dabei vorteilhaft als eine Montagehilfe dienen, um das Lagerelement montagetechnisch einfach und gleichzeitig mit großer Genauigkeit innerhalb des Lagerrahmens zu positionieren.

Gemäß der Erfindung weist der Lagerrahmen einen Mantel mit einem konischen Innenquerschnitt auf, welcher mit einem konischen Außenquerschnitt eines Mantels des Zwischenrahmens korrespondiert. Dieses geometrisch aufeinander abgestimmte Zusammenwirken von Lagerrahmen und Zwischenrahmen ermöglicht eine montagefreundliche Bewegungsführung des Lagerelementes bei dessen Einbau in den Lagerrahmen und erleichtert einen mechanisch stabilen Sitz zwischen dem Lagerelement und dem Lagerrahmen.

Ein passgenauer Einbau des Zwischenrahmens in den Lagerrahmen wird vorzugsweise dadurch unterstützt, dass der konische Mantel des Zwischenrahmens biegsame Eigenschaften hat, z.B. durch Einschnitte in dem Mantel. Hierdurch kann der Zwischenrahmen (gemeinsam mit dem federelastischen Lagerelement) mit besonders geringer Montagekraft soweit in den Lagerrahmen hineinbewegt werden, bis der Lagerrahmen einerseits und der Zwischenrahmen mit dem Lagerelement andererseits nach Art einer Presspassung miteinander verbunden sind. Dies fördert zusätzlich einen mechanisch stabilen Sitz des Lagerelementes.

Wie bereits erwähnt, ist der Querschnitt des Lagerrahmens bzw. seines Mantels insbesondere ringförmig ausgebildet. Entsprechend ist dann der Querschnitt des Zwischenrahmens bzw. seines Mantels ebenfalls ringförmig ausgebildet zur Aufnahme eines zylindrischen Lagerelementes. Im Falle dieser ringförmigen Querschnitte ist der Mantel des Lagerrahmens nach Art eines Kegelstumpfes ausgebildet, welcher mit einem ebenfalls kegelstumpfartigen Mantel des Zwischenrahmens zusammenwirkt.

In einer weiteren bevorzugten Ausführungsform ist die Lagervorrichtung derart ausgebildet, dass sie zwei miteinander lösbar verbundene Lagerbacken aufweist. Bei dieser Ausführungsform ist es möglich, zunächst das Lagerelement in eine erste Lagerbacke einzusetzen und danach die zweite Lagerbacke mit der ersten Lagerbacke zu verspannen (z.B. mittels Verschrauben). Das Lagerelement ist dann automatisch zwischen den beiden als Klemmbacken wirksamen Lagerbacken eingeklemmt. Dies ermöglicht eine einfache Montage und eine mechanisch stabile Einbaulage des Lagerelementes auch ohne Verwendung des bereits erwähnten zusätzlichen Zwischenrahmens.

Vorzugsweise trägt eine erste Lagerbacke einen in Richtung der zweiten Lagerbacke ausgerichteten Fixierzapfen, welcher in eine korrespondierende Fixieraussparung des Lagerelementes eingreift. Insbesondere greift der Fixierzapfen etwa formschlüssig in die Fixieraussparung ein.

Der Fixierzapfen dient vorteilhaft als eine Positionier- und Montagehilfe während des Einsetzens des Lagerelements in die erste Lagerbacke. Während des Betriebseinsatzes des Lagerelementes, also nach der Montage der zweiten Lagerbacke, wirkt der Fixierzapfen unerwünschten Positionsveränderungen (z.B. in einer axialen und/oder radialen Richtung) des Lagerelementes entgegen.

Die Verbindungskonsole ist konstruktionstechnisch vorzugsweise derart ausgebildet, dass sie zwei Lagerabschnitte mit jeweils einer Lagervorrichtung aufweist. Hierbei sind die beiden Lagerabschnitte entlang der Querrichtung voneinander beabstandet angeordnet. Somit kann eine einzige Verbindungskonsole mit wenigen Bauteilen bereits zwei in Querrichtung voneinander beabstandete Lagerpunkte für die Fahrzeugkabine bereitstellen. Insbesondere handelt es sich dabei um zwei bezüglich des Fahrzeugs frontseitige Lagerpunkte der Fahrzeugkabine. Alternativ oder zusätzlich können auch zwei heckseitige Lagerpunkte der Fahrzeugkabine mit einer derartigen Verbindungskonsole kombiniert werden. Der Montageaufwand für eine mechanisch stabile Lagerung bzw. Kopplung der Fahrzeugkabine an der Tragstruktur ist durch Verwendung einer oder mehrerer solcher Verbindungskonsole(n) weiter reduziert.

Die Verbindungskonsole und die Lagervorrichtungen sind vorzugsweise aus metallischen Werkstoffen hergestellt. Beispielsweise können zumindest einzelne Bestandteile davon (z.B. Lagerrahmen, Zwischenrahmen, Lagerbacken) als Gussteile gefertigt sein. Die Lagervorrichtungen können vollständig separat hergestellt werden oder zumindest teilweise einstückiger Bestandteil der Verbindungskonsole sein. Im Falle einer vollständig separaten Herstellung weisen die Lagervorrichtungen geeignete Lagerabschnitte für eine vorzugsweise starre Verbindung (z.B. mittels Verschweißen) mit der Verbindungskonsole auf.

Das erfindungsgemäße landwirtschaftliche Fahrzeug wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine Seitenansicht eines Ausschnittes des erfindungsgemäßen landwirtschaftlichen Fahrzeugs im Bereich der Fahrzeugkabine,
- Fig. 2: eine perspektivische Darstellung einer Verbindungskonsole mit zwei Lagervorrichtungen für jeweils ein Lagerelement,
- Fig.3a: eine perspektivische Darstellung eines Bauteiles einer Lagervorrichtung zur Aufnahme eines Lagerelementes,
- Fig. 3b: eine perspektivische Darstellung des Bauteiles gemäß Fig. 3a mit aufgenommenem Lagerelement,
- Fig. 3c: eine perspektivische Darstellung eines weiteren Bauteiles einer Lagervorrichtung zur Lagerung des Lagerelementes,
- Fig. 4: eine perspektivische Darstellung der Bauteile gemäß Fig. 3a bis Fig. 3c während ihres Zusammenbaus,
- Fig. 5: eine perspektivische Darstellung der Bauteile gemäß Fig. 4 nach ihrem Zusammenbau,
- Fig. 6: eine vergrößerte und teilweise geschnittene Seitenansicht des Details VI in Fig. 5,
- Fig. 7: eine perspektivische Darstellung einer weiteren Ausführungsform einer Lagervorrichtung zur Lagerung des Lagerelementes,
- Fig. 8: eine perspektivische Teildarstellung einer Verbindungskonsole mit einer weiteren Ausführungsform einer Lagervorrichtung zur Lagerung des Lagerelementes,
- Fig. 9: eine perspektivische Darstellung einer weiteren Ausführungsform einer Verbindungskonsole mit einer weiteren Ausführungsform zweier Lagervorrichtungen,
- Fig. 10: eine vergrößerte perspektivische Darstellung des Details X in Fig. 9, jedoch ohne Lagerelement,
- Fig. 11: eine andere perspektivische Darstellung etwa des Lagerabschnittes gemäß Fig. 10, jedoch mit einem Schnitt durch die Lagervorrichtung und das Lagerelement, und
- Fig. 12: eine perspektivische Darstellung einer weiteren Ausführungsform einer Verbindungskonsole mit einer weiteren Ausführungsform einer Lagervorrichtung.

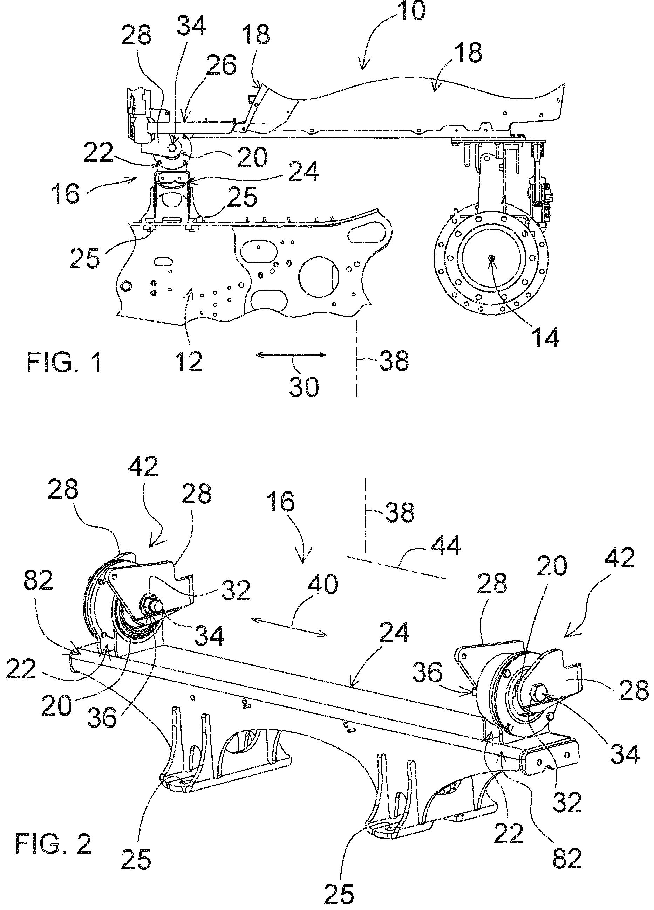

Fig. 1 zeigt einen Ausschnitt eines landwirtschaftlichen Fahrzeugs 10 in Form eines Traktors mit einer Tragstruktur 12 und einer Hinterachse 14. An der Tragstruktur 12 ist ein Kopplungssystem 16 befestigt. Es dient einer beweglichen Kopplung einer Fahrzeugkabine 18 mit der Tragstruktur 12.

Das Kopplungssystem 16 kann verschiedene (z.B. mechanische und/oder hydraulische) Komponenten für eine Kopplung oder Aufhängung der Fahrzeugkabine 18 an der Tragstruktur 12 enthalten. Erfindungsgemäß sind in der nachfolgenden Beschreibung ein (insbesondere gummiartiges) federelastisches Lagerelement 20, eine Lagervorrichtung 22 und eine Verbindungskonsole 24 als Bestandteile des Kopplungssystems 16 von Bedeutung.

Die Verbindungskonsole 24 ist mit der Tragstruktur 12 fest bzw. starr verbunden, z.B. mittels einer Verschraubung. Zu diesem Zweck ist die Verbindungskonsole von Schraublöchern 25 durchsetzt.

In einem bodenseitigen Kabinenbereich 26 weist die Fahrzeugkabine 18 mehrere Verbindungsstreben 28 auf, welche jeweils paarweise einem federelastischen Lagerelement 20 zugeordnet sind (Fig. 2). Diese Verbindungsstreben 28 sind entlang einer Fahrzeug-Längsrichtung 30 in einem frontseitigen Bereich der Fahrzeugkabine 18 vor der Hinterachse 14 angeordnet.

Die Verbindungsstreben 28 sind jeweils von einem Montageloch 32 für ein Spannelement 34 in Form einer Spannschraube. Das Spannelement 34 besitzt ein Außengewinde, welches mit einer ein entsprechendes Innengewinde aufweisenden Spannmutter 36 zusammenwirkt. In dem in Fig. 2 dargestellten Montagezustand durchsetzt das Spannelement 34 quer zu einer vertikalen Fahrzeug-Hochachse 38 zwei Verbindungsstreben 28 und das dazwischen angeordnete Lagerelement 20. Hierdurch werden die beiden Verbindungsstreben 28 und das zugeordnete Lagerelement 20 entlang einer Querrichtung 40 miteinander lösbar verspannt. Somit ist die Fahrzeugkabine 18 über das Spannelement 34 mit dem Lagerelement 20 lösbar verbunden.

Fig. 2 ist entnehmbar, dass im front- und bodenseitigen Kabinenbereich 26 der Fahrzeugkabine 18 zwei in Querrichtung 40 voneinander beabstandete Verbindungsstellen 42 zur Kopplung der Fahrzeugkabine 18 mit der Tragstruktur 12 vorgesehen sind. Die Querrichtung 40 wiederum verläuft parallel zu einer horizontalen Fahrzeug-Querachse 44.

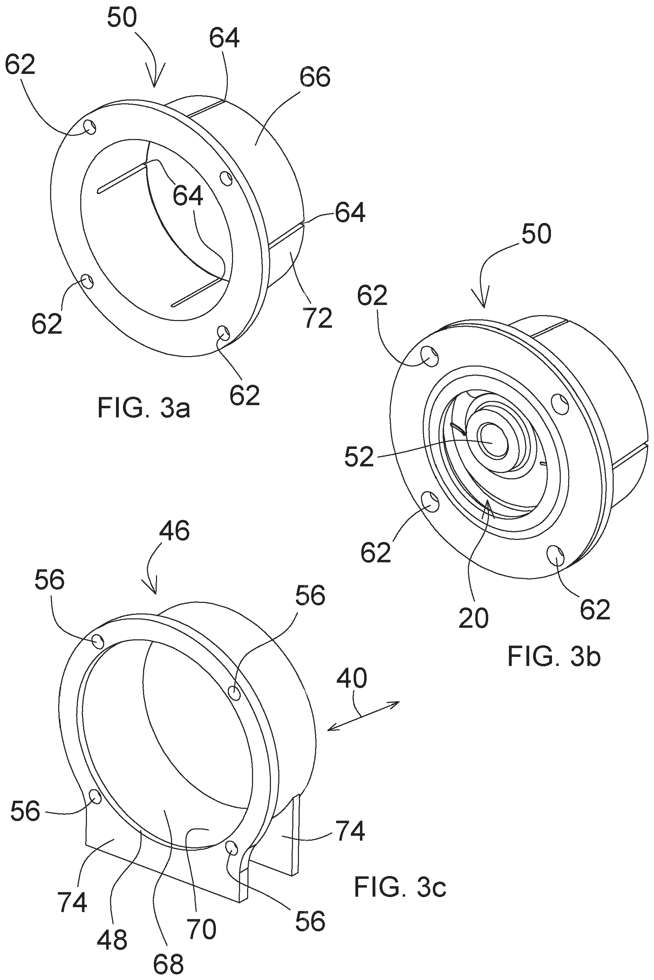

Der Aufbau der Lagervorrichtung 22 gemäß Fig. 2 ist in Fig. 3a bis Fig. 6 besser erkennbar. Die Lagervorrichtung 22 weist einen in Querrichtung 40 offenen Lagerrahmen 46 auf. Er hat einen ringartigen Querschnitt, verjüngt sich aber konisch bzw. kegelstumpfartig ausgehend von einem Montageeingang 48 entlang der Querrichtung 40.

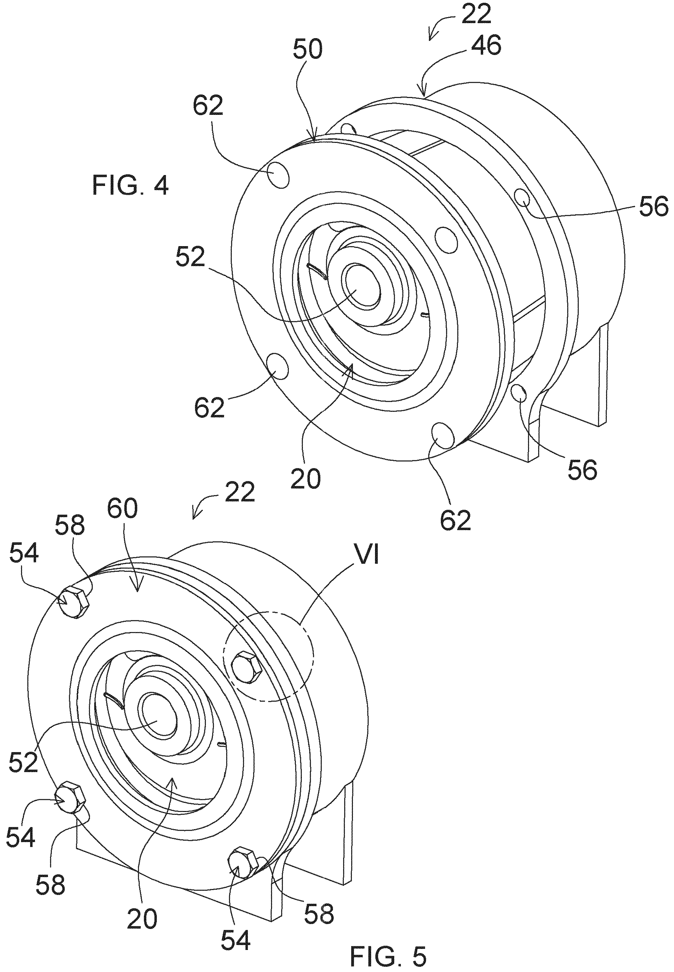

Ein manschettenartiger, im Querschnitt ebenfalls ringförmiger Zwischenrahmen 50 nimmt zunächst das im Wesentlichen zylindrische Lagerelement 20 auf (Fig. 3a, Fig. 3b). Fig. 3b ist außerdem entnehmbar, das das Lagerelement 20 von einem axialen Durchgangsloch 52 zur Aufnahme des Spannelementes 34 durchsetzt ist. Der Zwischenrahmen 50 wird gemeinsam mit dem Lagerelement 20 in den Montageeingang 48 des Lagerrahmens 46 eingesetzt und dann axial bzw. entlang der Querrichtung 40 weiter in den Lagerrahmen 46 hineinbewegt (Fig. 4).

Ein passgenauer Sitz des Zwischenrahmens 50 und des Lagerelementes 20 innerhalb des Lagerrahmens 46 wird mit geringem Montage- und Kraftaufwand automatisch erreicht, indem mehrere Lagerschrauben 54 verwendet werden (Fig. 5). Deren Außengewinde wirken jeweils mit einem Innengewinde 56 an dem Lagerrahmen 46 zusammen. Während der Montage durchsetzen die Lagerschrauben 54 zunächst Plattenlöcher 58 einer ringartigen Deckplatte 60 und danach Zwischenlöcher 62 des Zwischenrahmens 50. Daraufhin greifen die Außengewinde der Lagerschrauben 54 in die Innengewinde 56 des Lagerrahmens 46 ein. Mit zunehmendem Einschrauben der Lagerschrauben 54 werden der Zwischenrahmen 50 und das Lagerelement 20 automatisch und passgenau in den Lagerrahmen 46 hineingezogen. Zur Erzielung dieser passgenauen Lagerung (insbesondere nach Art einer Presspassung) des Lagerelementes 20 innerhalb der Lagervorrichtung 46 sind die federelastischen Eigenschaften des Lagerelementes 20 ebenso von Vorteil wie mehrere Manteleinschnitte 64 an einem Zwischenmantel 66 des Zwischenrahmens 50.

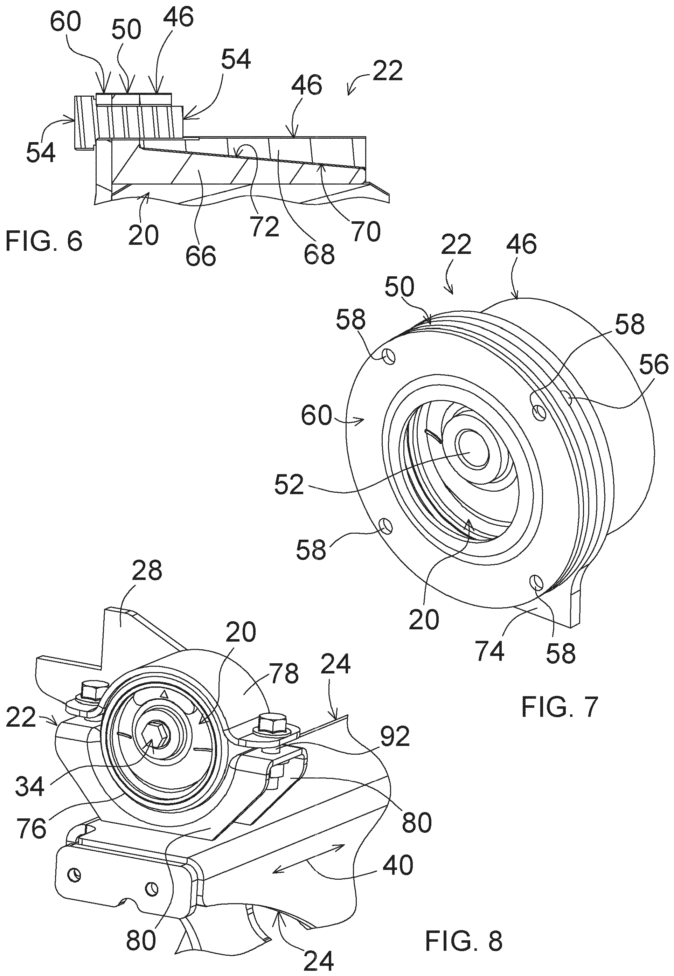

Außerdem wird ein montagetechnisch einfacher Einbau des Lagerelementes 20 in den Lagerrahmen 46 dadurch unterstützt, dass ein Lagermantel 68 des Lagerrahmens 46 einen - wie bereits erwähnt - konisch verjüngten Innenquerschnitt 70 aufweist und mit einem konisch verjüngten Außenquerschnitt 72 des Zwischenmantels 66 zusammenwirkt (Fig. 6).

Bei der Lagervorrichtung 22 gemäß Fig. 2 bis Fig. 6 sind zwei axial bzw. in Querrichtung 40 voneinander planparallel beabstandete Lagerstege 74 vorgesehen, welche mit der Verbindungskonsole 24 fest verbunden (z.B. verschweißt) sind. Die Lagerstege 74 ragen radial über den Lagermantel 68 hinaus und liegen jeweils in einer rechtwinklig zur Mittellängsachse des Lagermantels 68 angeordneten Ebene ein.

Fig. 7 zeigt eine weitere Ausführungsform der Lagervorrichtung 22. Hier trägt der Lagerrahmen 46 keinen Lagersteg 74. Vielmehr ist ein einziger Lagersteg 74 vorgesehen, welcher radial über den Zwischenmantel 66 hinausragt und in einer rechtwinklig zur Mittellängsachse des Zwischenmantels 66 angeordneten Ebene einliegt. Der Lagersteg 74 ist wiederum mit der Verbindungskonsole 24 fest verbunden (z.B. verschweißt). Der Zusammenbau der Lagervorrichtung 22 ist insofern gegenüber der Ausführungsform Fig. 3a bis Fig. 6 anders, als der Lagerrahmen 46 zum Zwischenrahmen 50 hin bewegt wird.

In Fig. 8 ist eine weitere Ausführungsform der Lagervorrichtung 22 dargestellt. Sie weist zwei miteinander lösbar verbundene Lagerbacken 76, 78 auf. Sie sind miteinander verschraubt und können dadurch das Lagerelement 20 nach Art zweier Klemmbacken zwischen sich aufnehmen und klemmfixieren. Eine erste Lagerbacke 76 ist mit zwei etwa planparallelen Stützstegen 80 verbunden. Die Stützstege 80 wiederum sind mit der Verbindungskonsole 24 fest verbunden (z.B. verschweißt). Insbesondere sind die Stützstege 80 und die Lagerbacke 76 als ein gemeinsames einstückiges Bauteil hergestellt.

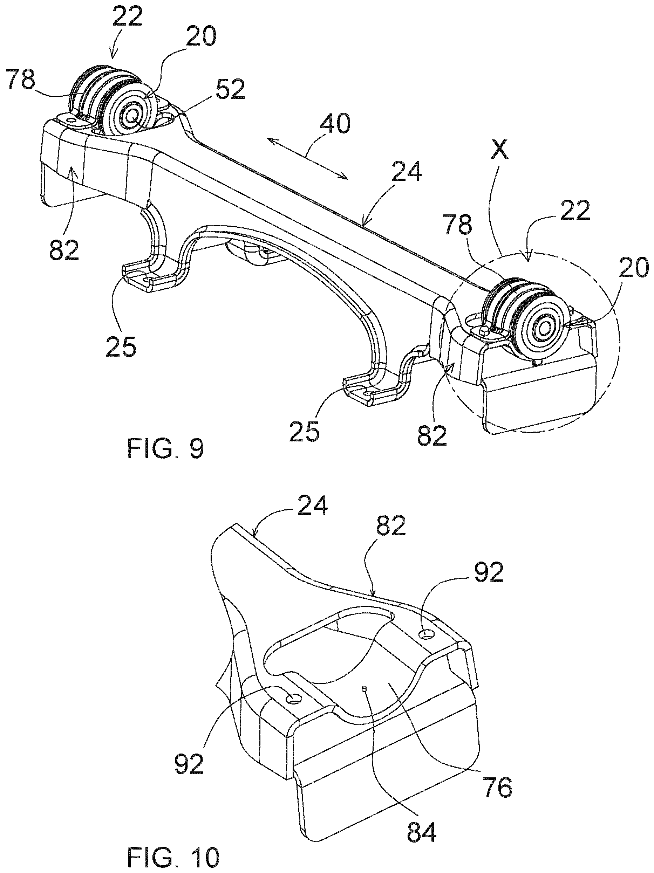

Fig. 9 zeigt eine Verbindungskonsole 24, deren zwei entlang der Querrichtung 40 voneinander beabstandete Lagerabschnitte 82 jeweils eine Lagervorrichtung 22 gemäß einer weiteren Ausführungsform tragen. Bei dieser Ausführungsform ist die zweite Lagerbacke 78 unter Zwischenlage des Lagerelementes 20 mit de ersten Lagerbacke 76 verschraubt. Die erste Lagerbacke 76 ist hier aber als einstückiger Bestandteil des Lagerabschnittes 82 der Verbindungskonsole 24 ausgebildet (Fig. 10).

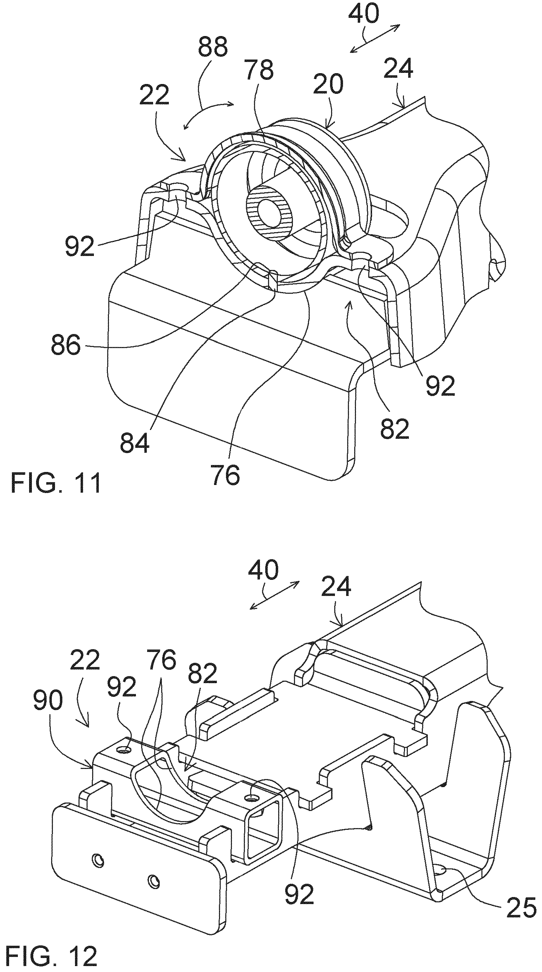

Die erste Lagerbacke 76 gemäß Fig. 10 trägt einen in Richtung der zweiten Lagerbacke 78 ausgerichteten Fixierzapfen 84, welcher etwa formschlüssig in eine korrespondierende Fixieraussparung 86 des Lagerelementes 20 eingreift (Fig. 11). Hierdurch ist das Lagerelement 20 sowohl entlang der Querrichtung 40 als auch entlang einer Rotationsrichtung 88 vor unerwünschten Positionsänderungen wirksam geschützt.

Fig. 12 eine weitere Ausführungsform der Verbindungskonsole 24 mit zwei Lagerabschnitten 82, von denen lediglich ein Lagerabschnitt 82 sichtbar ist. Als Bestandteil der Lagervorrichtung 22 ist lediglich die erste Lagerbacke 76 dargestellt, welche hier an einem Vierkantprofil 90 realisiert ist. Das Vierkantprofil ist mit dem Lagerabschnitt 82 fest verbunden (z.B. verschweißt) und von zwei Durchgangslöchern 92 durchsetzt, welche eine montagefreundliche Verschraubung zwischen der ersten Lagerbacke 76 mit der jeweiligen zweiten Lagerbacke 78 ermöglichen.

Insgesamt ermöglichen die verschiedenen Ausgestaltungen der Lagervorrichtung 22 und der Verbindungskonsole 24 eine funktionssichere und effiziente Kopplung der Fahrzeugkabine 18 mit der Tragstruktur 12 bei geringem Montageaufwand, geringen Montagekräften und ohne Einsatz von aufwändigem Spezialwerkzeug.

## Patentansprüche

1. Landwirtschaftliches Fahrzeug (10) mit einer Tragstruktur (12) und mit einem an der Tragstruktur (12) befestigten Kopplungssystem (16) zur beweglichen Kopplung einer Fahrzeugkabine (18) mit der Tragstruktur (12), wobei
- das Kopplungssystem (16) mindestens ein federelastisches Lagerelement (20) aufweist,
- die Fahrzeugkabine (18) über mindestens ein Spannelement (34) mit dem Lagerelement (20) lösbar verbunden ist, und
- die Spannkraftrichtung des Spannelementes (34) quer zu einer Fahrzeug-Hochachse (38) entlang einer Querrichtung (40) verläuft,
wobei das Kopplungssystem (16) eine an der Tragstruktur (12) befestigte Verbindungskonsole (24) aufweist, welche eine Lagervorrichtung (22) zur Lagerung des Lagerelementes (20) trägt, die einen in Querrichtung (40) offenen Lagerrahmen (46) zur Aufnahme des Lagerelementes (20) aufweist, wobei das Lagerelement (20) gemeinsam mit einem das Lagerelement (20) umgebenden Zwischenrahmen (50) in dem Lagerrahmen (46) einliegt, **dadurch gekennzeichnet, dass** der Lagerrahmen (46) einen Mantel (68) mit einem konischen Innenquerschnitt (70) aufweist, welcher mit einem konischen Außenquerschnitt (72) eines Mantels (66) des Zwischenrahmens (50) korrespondiert.

2. Landwirtschaftliches Fahrzeug nach Anspruch 1, **dadurch gekennzeichnet, dass** die Querrichtung (40) parallel zu einer Fahrzeug-Querachse (44) verläuft.

3. Landwirtschaftliches Fahrzeug nach Anspruch 1 oder 2, **dadurch gekennzeichnet, dass** das Lagerelement (20)
- von einem Durchgangsloch (52) zur Aufnahme des Spannelementes (34) durchsetzt ist, und/oder
- einen zylindrischen Außenquerschnitt aufweist.

4. Landwirtschaftliches Fahrzeug nach einem der vorhergehenden Ansprüche, **dadurch gekennzeichnet, dass** mehrere Manteleinschnitte (64) am Zwischenmantel (66) des Zwischenrahmens (50) vorgesehen sind.

5. Landwirtschaftliches Fahrzeug nach einem der vorhergehenden Ansprüche, **dadurch gekennzeichnet, dass** die Verbindungskonsole (24) entlang der Querrichtung (40) zwei voneinander beabstandete Lagerabschnitte (82) mit jeweils einer Lagervorrichtung (22) aufweist.

## Claims

1. Agricultural vehicle (10) having a supporting structure (12) and having a coupling system (16) which is fastened to the supporting structure (12) for the movable coupling of a vehicle cab (18) to the supporting structure (12), wherein
- the coupling system (16) has at least one spring-elastic bearing element (20),
- the vehicle cab (18) is releasably connected via at least one clamping element (34) to the bearing element (20), and
- the clamping force direction of the clamping element (34) runs transversely to a vehicle vertical axis (38) in a transverse direction (40),
wherein the coupling system (16) has a connecting bracket (24) which is fastened to the supporting structure (12) and which bears a bearing device (22) for bearing the bearing element (20), which bearing device has a bearing frame (46) which is open in the transverse direction (40) for receiving the bearing element (20), wherein the bearing element (20) is located in the bearing frame (46) together with an intermediate frame (50) surrounding the bearing element (20), **characterized in that** the bearing frame (46) has a lateral surface (68) with a conical internal cross section (70) which corresponds to a conical external cross section (72) of a lateral surface (66) of the intermediate frame (50).

2. Agricultural vehicle according to Claim 1, **characterized in that** the transverse direction (40) runs parallel to a vehicle transverse axis (44).

3. Agricultural vehicle according to Claim 1 or 2, **characterized in that** the bearing element (20)
- is penetrated by a through-hole (52) for receiving the clamping element (34), and/or
- has a cylindrical external cross section.

4. Agricultural vehicle according to one of the preceding claims, **characterized in that** a plurality of lateral-surface cut-outs (64) are provided on the intermediate lateral surface (66) of the intermediate frame (50).

5. Agricultural vehicle according to one of the preceding claims, **characterized in that** the connecting bracket (24) has in the transverse direction (40) two bearing portions (82) which are spaced apart from one another and each has a bearing device (22).

## Revendications

1. Véhicule agricole (10) comprenant une structure porteuse (12) et un système d'accouplement (16) fixé à la structure porteuse (12) pour accoupler de manière mobile une cabine de véhicule (18) à la structure porteuse (12),
- le système d'accouplement (16) possédant au moins un élément de palier (20) flexible,
- la cabine du véhicule (18) étant reliée de manière amovible à l'élément de palier (20) par le biais d'au moins un élément de serrage (34), et
- la direction de la force de serrage de l'élément de serrage (34) suivant un tracé transversal à un axe vertical de véhicule (38), le long d'une direction transversale (40),
le système d'accouplement (16) possédant une console de liaison (24) fixée à la structure porteuse (12), laquelle porte un dispositif de palier (22) destiné à supporter l'élément de palier (20), qui possède un cadre de palier (46) ouvert dans la direction transversale (40) destiné à recevoir l'élément de palier (20), l'élément de palier (20) étant logé dans le cadre de palier (46) conjointement avec un cadre intermédiaire (50) qui entoure l'élément de palier (20), **caractérisé en ce que** le cadre de palier (46) possède une enveloppe (68) avec une section transversale intérieure conique (70) qui correspond à une section transversale extérieure conique (72) d'une enveloppe (66) du cadre intermédiaire (50).

2. Véhicule agricole selon la revendication 1, **caractérisé en ce que** la direction transversale (40) suit un tracé parallèle à un axe transversal de véhicule (44).

3. Véhicule agricole selon la revendication 1 ou 2, **caractérisé en ce que** l'élément de palier (20)
- est traversé par un trou traversant (52) destiné à recevoir l'élément de serrage (34), et/ou
- présente une section transversale extérieure cylindrique.

4. Véhicule agricole selon l'une des revendications précédentes, **caractérisé en ce que** plusieurs entailles d'enveloppe (64) sont prévues au niveau de la paroi intermédiaire (66) du cadre intermédiaire (50).

5. Véhicule agricole selon l'une des revendications précédentes, **caractérisé en ce que** la console de liaison (24) possède, le long de la direction transversale (40), deux portions de palier (82) espacées l'une de l'autre, chacune avec un dispositif de palier (22).
